Europäisches Patentamt

European Patent Office

Office européen des brevets

(11) Veröffentlichungsnummer: **0 496 202 A2**

# EUROPÄISCHE PATENTANMELDUNG

(21) Anmeldenummer: **92100146.7**

(22) Anmeldetag: **07.01.92**

(51) Int. Cl.5: **B29B 11/04**, B29C 43/20, B29C 47/04, B29D 30/52, //B29K21:00

(30) Priorität: **24.01.91 DE 9100812 U**

(43) Veröffentlichungstag der Anmeldung: **29.07.92 Patentblatt 92/31**

(84) Benannte Vertragsstaaten:
**AT BE CH DE DK ES FR GB GR IT LI LU NL PT SE**

(71) Anmelder: **GUMMIWERK KRAIBURG GMBH & CO.**
**Teplitzer Strasse 20**
**W-8264 Waldkraiburg(DE)**

(72) Erfinder: **Schmidt, Fritz**
**Johann-Strauss-Strasse 10**
**W-8264 Waldkraiburg(DE)**
Erfinder: **Maier, Peter**
**Haselbach 15**
**W-8261 Aschau(DE)**
Erfinder: **Theivogt, Joachim**
**Lindenstrasse 34**
**W-8261 Jettenbach(DE)**
Erfinder: **Schmidt, Thorsten**
**Blumenstrasse 4**
**W-8264 Waldkraiburg-Niederndorf(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Kopernikusstrasse 9 Postfach 86 08 20**
**W-8000 München 86(DE)**

(54) **Verbundstoff aus zwei oder mehreren reaktionsfähigen Komponenten.**

(57) Es wird ein Verbundstoff aus zwei oder mehreren miteinander reaktionsfähigen Komponenten beschrieben, der dadurch gekennzeichnet ist, daß er die Komponenten in mindestens zwei unterschiedlichen, voneinander abgegrenzten Bereichen gleicher oder verschiedener Gestalt enthält, und vorzugsweise mindestens zwei unterschiedliche Bereiche eine unterschiedliche Farbe aufweisen. Vorzugsweise besteht ein solcher Verbundstoff aus zwei oder mehreren übereinanderliegenden parallelen Schichten. Die Verbundstoffe eignen sich inbesondere zur Verwendung in der Gummiindustrie, wie z.B. zur Herstellung von Bindeschichten zur Reifenrunderneuerung nach dem Kaltverfahren, oder von Reifenlaufflächenmischungen.

EP 0 496 202 A2

Die Erfindung betrifft Verbundstoffe aus zwei oder mehreren miteinander reaktionsfähigen Komponenten.

Auf verschiedenen Gebieten der Technik ist es erforderlich, Substanzmischungen, die reaktionsfähige Bestandteile enthalten, die miteinander reagieren können, herzustellen, zu lagern und zu verarbeiten. Um eine vorzeitige Reaktion der Bestandteile untereinander zu verhindern, ist es oft erforderlich, diese Bestandteile erst kurz vor ihrer Verarbeitung zu mischen, oder aber unter besonderen Bedingungen und/oder mit bestimmten Zusätzen zu lagern. Bei der Herstellung einer solchen Mischung erst kurz vor der Verarbeitung werden die einzelnen Bestandteile meist getrennt voneinander dem Endverarbeiter bereitgestellt, der dann die Vermischung selbst vornehmen muß, was in der Regel geschultes Fachpersonal erfordert, sowie einen zusätzlichen apparativen Aufwand. Außerdem sind die oft erforderlichen genauen mengenmäßigen Zusammensetzungen auf der Anwenderseite meist schwierig einzustellen und einzuhalten, wodurch es bei der Weiterverarbeitung zu beträchtlichen Mängeln in der Verarbeitbarkeit und/oder Qualität der Endprodukte kommen kann.

Aufgabenstellung der vorliegenden Erfindung ist es deshalb, die vorstehend genannten Nachteile zu vermeiden, und ein Verbundmaterial bereitzustellen, das die einzelnen Bestandteile bereits in den richtigen Mengenverhältnissen enthält, als solches direkt bezogen und gelagert werden kann, direkt weiterverarbeitet werden kann, und bei dem vorzugsweise eine visuelle Beurteilung der Mischung der einzelnen Komponenten des Verbundsystems durchgeführt werden kann.

Diese Aufgabenstellung wird mit dem erfindungsgemäßen Verbundstoff gemäß Anspruch 1 gelöst, der aus zwei oder mehreren miteinander reaktionsfähigen Komponenten besteht, und der dadurch gekennzeichnet ist, daß er die Komponenten in mindestens zwei unterschiedlichen, voneinander abgegrenzten Bereichen gleicher oder verschiedener Gestalt enthält.

Zweckmäßige Ausgestaltungen davon sind Gegenstand der Ansprüche 2 bis 11.

Vorzugsweise liegt der Verbundstoff in Form einer Schichtstruktur vor, in der die einzelnen, aus den Bestandteilen gebildeten Bereiche von aneinanderliegenden Schichten gebildet werden. Vorzugsweise werden die einzelnen Bereiche durch übereinanderliegende parallele Schicht gleicher, und insbesondere verschiedener Dicke ausgebildet.

Figur 1 zeigt ein Beispiel eines erfindungsgemäßen Verbundstoffes aus zwei übereinanderliegenden parallelen Schichten gleicher Dicke aus den Komponenten (1) und (2).

Figur 2 zeigt ein erfindungsgemäßes Verbundsystem ähnlich dem der Figur 1, das aber eine sandwichartige Struktur aufweist, d.h. zwei dünnere Schichten aus der Komponente (2) sind auf die dickere Mittelschicht der Komponente (1) aufgebracht.

Obwohl die Zahl der in dem erfindungsgemäßen Verbundstoff enthaltenen Komponenten nicht begrenzt ist, und sich nach der Art und Anwendung des Verbundstoffs richtet, enthalten bevorzugte Ausführungsformen in der Regel zwei bis sechs verschiedene Bestandteile, vorzugsweise zwei bis drei und insbesondere zwei reaktionsfähige Komponenten unterschiedlicher chemischer und/oder physikalischer Zusammensetzung.

Vorzugsweise besitzen dabei Bereiche mit Komponenten der gleichen chemischen und/oder physikalischen Zusammensetzung auch die gleiche Farbe.

Erfindungsgemäß wird somit ein Verbundstoff aus zwei oder mehreren reaktionsfähigen Komponenten bereitgestellt, die sich bevorzugt hinsichtlich ihrer Farbe unterscheiden, und in dem die miteinander reaktionsfähigen Komponenten getrennt voneinander vorliegen. Aus diesem Verbundstoff läßt sich dann eine hochreaktive Endmischung herstellen, indem man den erfindungsgemäßen Verbundstoff, der vorzugsweise aus mindestens zwei aufeinanderliegenden Schichten besteht, in einer entsprechenden Mischvorrichtung, vorzugsweise einem Kneter, Extruder, Kalander oder Walzwerk homogenisiert, wobei insbesondere durch eine Färbung der einzelnen Komponenten leicht feststellbar ist, wann diese Homogenität erreicht ist. Auf diese Weise läßt sich die Lagerfähigkeit derartiger Mischungen wesentlich erhöhen bzw. bei gleicher Lagerfähigkeit wie bisher eine wesentlich höhere Reaktivität im gemischten Zustand erreichen. Letzteres führt zu verkürzten Reaktionszeiten und damit verbunden zu erhöhter Wirtschaftlichkeit.

Der Durchmischungsgrad kann erfindungsgemäß auch durch eine Materialanalyse festgestellt werden. Vereinfacht wird die Anwendung jedoch bei der bevorzugten Ausführungsform der Erfindung, bei der die Bereiche unterschiedlich gefärbt sind. Hierbei kann die Feststellung der ausreichenden Durchmischung visuell erfolgen.

Neben dem Vorteil einer leichten visuellen Beurteilung der gründlichen Durchmischung, die durch die Mehrfarbigkeit der einzelnen Komponenten ermöglicht wird, liegt ein besonderer Vorteil auch darin, daß das Vermischen in üblichen und leicht zu bedienenden Apparaturen vorgenommen werden kann, vorzugsweise mit einem Extruder, was erheblich wirtschaftlicher ist als ein Vermischen z.B. auf einem Walzwerk. Durch Anwendung eines Extruders statt eines Walzwerkes ist es auch möglich, wesentlich geringere Materialdik-

ken der Mischung herzustellen, wodurch Einsparungen erzielbar sind. Eine geringe Materialdicke kann für einzelne Anwendungen, wie z.B. für die bevorzugte Anwendung bei der Reifenrunderneuerung, besonders vorteilhaft sein, weil bei einer derartigen Anwendung z.B. nur die Bindeschicht für die Kaltvulkanisation, die die Verbindung zwischen dem neuen Laufstreifen und der alten Gummischicht auf der Karkasse, die runderneuert wird, herstellt, auszubilden ist.

Die erfindungsgemäßen Verbundstoffe enthalten bevorzugt solche Komponenten, die sich gut für eine Vermischung in den vorstehend als bevorzugt genannten Mischvorrichtungen eignen, wie z.B. in Knetern, Extrudern, Kalandern oder auch Walzwerken.

Neben der vorstehend bereits genannten Anwendungsmöglichkeit des erfindungsgemäßen Verbundsystems zur Herstellung der Bindeschichtmischung für die Reifenrunderneuerung ist eine weitere zweckmäßige Anwendungsmöglichkeit auch die Herstellung der eigentlichen vulkanisierbaren Laufflächenmischung für die Runderneuerung von Autoreifen, wobei erfindungsgemäß ebenfalls das zu vulkanisierende Material zur Erhöhung der Lagerstabilität in getrennten Schichten vorgesehen werden kann, und erst im Extruder oder auch im Walzwerk homogen gemischt und dann zur Vulkanisation auf die Karkasse aufgebracht wird.

Erfindungsgemäß kann es in einigen Fällen zweckmäßiger sein, auch mit mehr als zwei Schichten zu arbeiten, z.B. mit drei, vier oder mehr Schichten, wobei dies insbesondere davon abhängt, wieviele miteinander reaktionsfähige Bestandteile, die die normale Lagerfähigkeit verringern könnten, in der Mischung vorhanden sind, und voneinander getrennt gehalten werden sollen.

Die Lagerfähigkeit kann auch noch durch Zwischenschichten erhöht werden, die gegenüber einer Reaktion zwischen Komponenten benachbarter Schichten sozusagen isolierend wirken, weil sie die Wanderung reaktionsfähiger Bestandteile aus einer Schicht in die andere Schicht erschweren. Auf dem Gebiet der Bindeschichtmischungen oder von Vulkanisationsmischungen wird als isolierende Zwischenschicht vorzugsweise ebenfalls eine Gummimischung verwendet.

Da für die Zusammensetzung des Endgemisches die genaue Einhaltung der Proportionen der einzelnen Komponenten wesentlich ist, und eine gute Weiterverarbeitung des Endgemisches überhaupt erst ermöglicht, ist es insbesondere zweckmäßig, daß auch die einzelnen Bereiche, z.B. die einzelnen Schichten selbst, möglichst exakt ausgebildet sein sollen, also z.B. keine großen Schwankungen in den Ausmaßen, z.B. der Dicke der Schicht, aufweisen sollen.

Die Herstellung der erfindungsgemäßen Verbundstoffe kann auf eine für derartige Strukturen an sich übliche Weise erfolgen, z.B. indem man auf eine Schicht einseitig oder beidseitig eine weitere Schicht aufbringt z.B. durch Coextrusion einer anderen Komponente, oder durch Aufbringen einer Lösung der Komponente in einem geeigneten Lösungsmittel und nachfolgende Entfernung des Lösungsmittels, oder durch Sprühbeschichtung, usw.

Nachfolgend soll eine erfindungsgemäße Ausführungsform und deren Verwendung am Beispiel einer Bindeschicht zur Verwendung bei der Runderneuerung von Autoreifen durch Kaltvulkanisation beschrieben werden, es ist aber selbstverständlich, daß das Beispiel der Bindeschicht nur zur besseren Veranschaulichung erfindungsgemäßer Ausführungsformen dienen soll, und die erfindungsgemäßen Ausführungsformen deshalb nicht auf diese Anwendung beschränkt sind.

Bei der Runderneuerung von Reifen, insbesondere für Kraftfahrzeuge, wird die Lauffläche und die Seitenwandplatte von abgefahrenen Reifen erneuert. Dies kann durch Heißvulkanisation oder durch Kaltvulkanisation erfolgen.

Bei der Kaltvulkanisation werden bereits vorvulkanisierte Laufstreifen eingesetzt, und es muß lediglich eine Verbindung zwischen diesen bereits vorvulkanisierten Laufstreifen und der Karkasse hergestellt werden. Diese Verbindung wird durch Vulkanisation einer Zwischenschicht aus einer speziell dafür konzipierten Kautschukmischung hergestellt.

Diese Bindeschicht kann als Einkomponenten-Mischung auf den Laufstreifen oder die Karkasse aufgebracht werden, und der Laufstreifen dann anschließend auf die Karkasse. Die Vulkanisationsgeschwindigkeit der Bindeschicht ist, bedingt durch den Einfluß auf die Lagerfähigkeit, eingeschränkt.

Bei der Verwendung einer in zwei Komponenten getrennten Bindeschicht wird diese auf einem Walzwerk vermischt, dann auf den Laufstreifen aufgebracht, und dieser anschließend auf die Karkasse aufgebracht. Der Vorteil des Zweikomponenten-Materials ist eine wesentlich schnellere Vulkanisationsgeschwindigkeit, da eine vorzeitige Anvulkanisation während der Lagerung durch die Trennung der miteinander reagierenden Vernetzungsmittel verhindert wird. Ein Nachteil dieses Zweikomponenten-Materials besteht aber in der schlechten Prüfmöglichkeit der Einzelkomponenten bzw. deren Einsatzmengen beim Vermischen, was zu einer stark unterschiedlichen Vulkanisationsgeschwindigkeit führen kann. Eine Vermischung im Extruder ist nur schwer möglich.

Diese Nachteile lassen sich unter Verwendung eines erfindungsgemäßen Verbundstoffes, bei dem beide Komponenten bereits als Verbund im richtigen Mengenverhältnis vorliegen, vermeiden. Es lassen sich ähnlich schnelle Vulkanisationsgeschwindigkeiten wie bei der Verwendung des "getrennten" Zweikomponenten-Systems erzielen.

Das Vermischen der einzelnen Komponenten des erfindungsgemäßen Verbundsystems kann z.B. auf einem Walzwerk, oder insbesondere durch einen Mischextruder erfolgen. Auf diese Weise lassen sich alle durch während des Runderneuerungsverfahrens aus wechselnden Mengenverhältnissen bei der bisherigen Anwendung von Zweikomponenten-Systemen auftretenden Unsicherheiten vermeiden.

In einer erfindungsgemäß besonders bevorzugten Ausführungsform besteht der Verbundstoff aus zwei parallel übereinanderliegenden Schichten z.B. aus einer dünneren und einer dickeren. Die dicke Schicht besitzt dabei bevorzugt eine dunkle Farbe, und die dünnen Schichten eine helle Farbe.

Diese erfindungsgemäßen Verbundstoffe besitzen hervorragende Eigenschaften zur Herstellung einer Bindeschicht für die Kaltvulkanisation von Reifen. Die Herstellung der erfindungsgemäßen Mehrkomponenten-Materialien (Verbundstoffe), und insbesondere von Verbundstoffen zur Verwendung als Bindeschicht für die Runderneuerung von Autoreifen, oder auch als Vulkanisationsmischung in der Gummiindustrie, kann auf konventionellen Maschinen erfolgen. Damit die erfindungsgemäß erzielbaren Vorteile voll genützt werden können, sollen beide Komponenten fest miteinander verbunden sein.

Dies kann durch ein Zusammenkleben der Kontaktflächen unter Einwirkung geringer mechanischer Drucke erfolgen, wodurch eine dauerhafte ganzflächige Verbindung zustande kommt. Für bestimmte Anwendungen (z.B. beim Vermischen auf einem Walzwerk) kann auch eine nur partielle Verbindung der Komponenten ausreichend sein. Die Verbindung muß nicht zwingend z.B. durch Aufeinanderkleben der einzelnen Schichten hergestellt sein, sondern sie kann auch auf mechanische Art (z.B. durch Verspleißen) erreicht werden, usw.

Wesentlich ist insbesondere die Maßhaltigkeit der Einzelkomponenten, d.h. ihr Vorliegen in dem gewünschten Mengenverhältnis, weil dies direkt die Eigenschaften des Endproduktes beeinflußt.

Das Zusammenbringen der Einzelkomponenten kann z.B. auf folgende Weise geschehen:

a) Kalandrieren einer Komponente und anschließendes Aufbringen dieses Materials auf die nachfolgend kalandrierte zweite Komponente;

b) Kalandrieren einer Komponente, die anschließend geschnitten und in entsprechender Abmessung auf aus der zweiten Komponenten extrudierte Fütterstreifen aufgebracht wird;

c) Zusammenbringen der Komponenten durch Coextrusion der einen Komponente auf eine andere, z.B. in einem Arbeitsgang unter Verwendung eines Extruders mit Unterspritzvorrichtung; und

d) mechanische Verbindung der beiden Komponenten, z.B. durch Verspleißen, Verflechten usw.

Wie bereits vorstehend erwähnt, sind die im Zusammenhang mit der Anwendung auf dem Gebiet der Reifenrunderneuerung angeführten erfindungsgemäßen Ausführungsformen, Herstellungsweisen usw. nicht auf das Gebiet der Reifenrunderneuerung beschränkt, sondern sind auch für andere Anwendungsgebiete, wie z.B. den vorstehend genannten, und insbesondere auf anderen Bereichen der Gummiverarbeitung und der Kunststoffverarbeitung, einsetzbar. Gegebenenfalls kann es dann zweckmäßig sein, an die Herstellung der vorstehend im Zusammenhang mit der Reifenrunderneuerung beschriebenen 2- oder 3-Schichtstrukturen noch weitere Arbeitsgänge anzuschließen, die die Möglichkeit des Vermischens von weiteren zusätzlichen Komponenten ermöglichen.

Die nachfolgenden Beispiele sollen die Erfindung näher erläutern, ohne sie darauf zu beschränken.

Wenn nicht anders angegeben, beziehen sich Mengen- und Prozentangaben auf das Gewicht, Temperaturangaben auf die Celsius-Skala.

**Beispiel 1**

| Verbundstoff aus reaktionsfähigen Komponenten | | | | |
|---|---|---|---|---|
| Komponente Bestandteil | zum Beispiel | A phr | B phr | Gemisch phr |
| Naturkautschuk mit $ML(1 + 4) = 50$ | | 100 | 100 | 100 |
| Hocharomat. Mineralöl | | 15 | 11 | 13 |
| Ruß N 375 | | 34 | 0 | 17 |
| hochaktive Kieselsäure | | 0 | 30 | 15 |
| Phenolharz | Koresin | 3 | 3 | 3 |
| Titandioxid | Bayertitan A | 0 | 5 | 2,5 |
| ZnO | ZnO RS | 5 | 5 | 5 |
| Farbpigment | Gelb | 0 | 0,5 | 0,3 |
| Stearinsäure | | 2 | 2 | 2 |
| Antioxidant | IPPD | 1,5 | 0 | 0,8 |
| Alterungsschutz | TMQ | 1,5 | 0 | 0,8 |
| Schwefel unlösl. | Schwefel | 5 | 0 | 2,5 |
| Sulfenamidbeschleuniger | CBS | 1 | 2 | 1,5 |
| Guanidinbeschleuniger | DPG | 0 | 2 | 1 |

Verwendete Abkürzungen:

IPPD     N-Phenyl-N-(1.3-dimethylbutyl)-p-phenylendiamin

TMQ     1.2-Dihydro-2.2.4-trimethylchinolin

CBS     Benzothiazyl-2-cyclohexyl-sulfenamid

DPG     Diphenylguanidin

phr     parts per hundred rubber

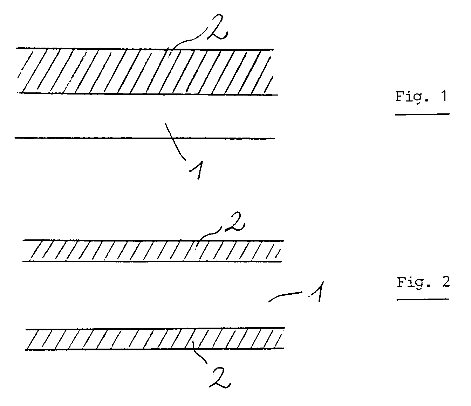

Aus den Komponenten A und B wurde ein erfindungsgemäßer Verbundstoff aus zwei Schichten gemäß der Figur 1 hergestellt, sowie ein Verbundstoff aus drei Schichten gemäß der Figur 2. Die obere Schicht des Verbundstoffes gemäß Figur 1 bestand aus der Komponente B, und die untere Schicht aus der Komponente A. In dem Verbundstoff gemäß Figur 2 bestanden die dünnen Schichten (2) jeweils aus der Komponente B. Die Dicke der Schichten (1) und (2) wurden so gewählt, daß die Komponenten A und B im Verbundstoff im Gewichtsverhältnis 1:1 vorlagen. Die Gesamtdicke der Verbundstoffe betrug ca. 0,3 bis 0,5 cm.

Vergleichsbeispiel

Als Meßgröße für die Veränderung des Materials während der Lagerung wurde die Mooney-Viskosität (nach DIN 53523) herangezogen.

Eine für die anschließende Weiterverarbeitung des Materials unerwünschte Bildung von Vernetzungsstellen kann über den Viskositätsanstieg beschrieben werden.

Aus Gründen der Zeitverkürzung wurde die Lagerung bei erhöhter Temperatur (50 °C) durchgeführt.

A =     Lagerung des vermischten Materials

B =     Lagerung des erfindungsgemäßen 2-Schichten-Materials (Vermischen erfolgte hier erst nach Lagerung).

Die Veränderung der Viskosität erfolgt in % vom Ausgangswert

| Lagerdauer (Tage) | A | B |
|---|---|---|
| 0 | 0 | 0 |
| 2 | +14 | +6 |
| 4 | +57 | +10 |
| 6 | vulkanisiert | +12 |
| 8 | | +13 |
| 10 | | +27 |
| 12 | | vulkanisiert |

Anmerkung:

Eine Veränderung der Viskosität um 20 % kann bereits erhebliche Auswirkungen auf die Weiterverarbeitung haben.

In den in Beispiel 1 beschriebenen erfindungsgemäßen Verbundstoffen besitzt die dicke Schicht eine schwarze Farbe, die dünne Schicht eine blaue Farbe.

**Patentansprüche**

**1.** Verbundstoff aus zwei oder mehreren miteinander reaktionsfähigen Komponenten,
**dadurch gekennzeichnet,**
daß der Verbundstoff die Komponenten in voneinander abgegrenzten Bereichen mit gleicher oder verschiedener Gestalt enthält.

**2.** Verbundstoff nach Anspruch 1,
**dadurch gekennzeichnet,**
daß die Bereiche farblich unterscheidbar sind.

**3.** Verbundstoff nach Anspruch 1 oder 2,
**dadurch gekennzeichnet,**
daß er zwei bis sechs, vorzugsweise zwei bis drei miteinander reaktionsfähige Komponenten unterschiedlicher chemischer und/oder physikalischer Zusammensetzung enthält.

**4.** Verbundstoff nach einem der vorhergehenden Ansprüche,
**dadurch gekennzeichnet,**
daß er eine Schichtstruktur aufweist, in der die Bereiche von übereinanderliegenden, vorzugsweise parallelen Schichten, insbesondere mit unterschiedlicher Dicke gebildet werden.

**5.** Verbundstoff nach einem der vorhergehenden Ansprüche,
**dadurch gekennzeichnet,**
daß Bereiche mit gleichen Komponenten der gleichen chemischen oder/und physikalischen Zusammensetzung die gleiche Farbe besitzen.

**6.** Verbundstoff nach einem der vorhergehenden Ansprüche,
**dadurch gekennzeichnet,**
daß die Bereiche direkt aneinandergefügt sind.

**7.** Verfahren nach einem der Ansprüche 1 bis 5,
**dadurch gekennzeichnet,**

daß zwei oder mehrere benachbarte Schichten durch eine dünne Zwischenschicht und/oder Klebeschicht voneinander getrennt sind.

8. Verbundstoff nach einem der vorhergehenden Ansprüche,

   **dadurch gekennzeichnet,**

   daß er auf Knetern, Extrudern, Kalandern oder Walzwerken so verarbeitbar ist, daß die Komponenten der abgegrenzten Bereiche innig miteinander vermischt werden.

9. Verbundstoff nach einem der vorhergehenden Ansprüche,

   **dadurch gekennzeichnet,**

   daß er als reaktionsfähige Komponenten Kautschukmaterialien, zusammen mit geeigneten Vernetzungs- oder Beschleunigersystemen enthält.

10. Verbundstoff nach Anspruch 9,

    **dadurch gekennzeichnet,**

    daß er aus Komponenten besteht, die nach einem Vermischen der Bereiche miteinander eine vulkanisierfähige Gummimischung ergeben.

11. Verbundstoff nach Anspruch 9 oder 10,

    **dadurch gekennzeichnet,**

    daß er die Komponenten einer Bindeschicht zur Reifenrunderneuerung nach dem Kaltverfahren enthält.

Fig. 1

Fig. 2